Europäisches Patentamt

European Patent Office

Office européen des brevets

(19)

(11) Publication number: **0 214 585**
A2

## (12) EUROPEAN PATENT APPLICATION

(21) Application number: **86112046.7**

(22) Date of filing: **01.09.86**

(51) Int. Cl.⁴: **B 23 B 13/08**
**B 23 B 13/12**

(30) Priority: **12.09.85 IT 354685**

(43) Date of publication of application:
**18.03.87 Bulletin 87/12**

(84) Designated Contracting States:
**CH DE FR LI**

(71) Applicant: **I.E.M.C.A. S.p.a. Industria Elettromeccanica Complessi Automatici**
**Via Emilia Ponente, 6**
**I-48018 Faenza Province of Ravenna(IT)**

(72) Inventor: **Fabbri, Vladimiro**
**Via Gallignani 9**
**I-48018 Faenza (Province of Ravenna)(IT)**

(74) Representative: **Modiano, Guido et al,**
**MODIANO, JOSIF, PISANTY & STAUB Modiano & Associati Via Meravigli, 16**
**I-20123 Milan(IT)**

(54) Bar guiding device for use with equipment for feeding bars to machine tools.

�ନ The bar guiding device comprises a plurality of fixed coaxial holders (6) having an upward open semicylindrical concave side (8) and being used for supporting a bar pusher (9). between such fixed holders (6) there are coaxially interposed tubular elements (10) serving the function of guiding the bars (B). The tubular elements comprise each one pair of semicylindrical segments (11, 12) which overlie each other and are hinged to each other along one side. To enable introduction of a bar (B) into the device, the upper semicylindrical segments (11) are driven open, whilst to allow the bar pusher therethrough, the semicylindrical segments (11, 12) are driven sequentially to raise and lower with respect to the bar (B) line of forward movement.

Fig 6

Croydon Printing Company Ltd.

## BAR GUIDING DEVICE FOR USE WITH EQUIPMENT FOR FEEDING BARS TO MACHINE TOOLS

This invention relates to a bar guiding device for use with equipment for feeding bars to machine tools.

With the above-cited equipment, more commonly referred to as "bar magazines", it is notoriously difficult to keep the bars properly guided, and avoid damaging them, prevent flapping, and reduce noise.

Such difficulties are increased by the fact that the magazines are expected to operate with different diameter bars having a cross-sectional shape which may be other than circular, and by that the guiding channel must be designed to enable feeding forward of the bar pusher and the "vane" whereby it is connected to the entrainment member.

It is the technical aim of this invention to provide a device affording improved guiding of the bars into magazines.

Within the above aim, it is an object of this invention to provide a device which is simple construction-wise, and accordingly, additionally to being economically advantageous, also sufficiently strong to withstand the rough treatment to which devices of this kind are subjected.

This aim and this and other objects, which will become apparent hereinafter, are achieved by a device which is characterized in that it comprises a plurality of fixed coaxial holders having a semicylindrical upwardly open concave side for supporting the bar pusher, between said holders there being interposed coaxially bar-guiding tubular elements adapted to be opened along one and the same side, and each including a pair of semicylindrical segments hinge-mounted along one side and being controlled to move toward each other and form a guide channel for a bar and to move away from each other and permit introduction of a bar and the bar pusher therethrough.

Further features and advantages of this invention will be more clearly apparent from the following description, in conjunction with the accompanying drawings, where:

Figure 1 is a plan view of this device showing its most essential parts;

Figure 2 is a sectional view of the device during a bar loading operation;

Figure 3 is a sectional view of this device taken through a bar guide zone;

Figure 4 shows the same zone as Figure 3 while the bar pusher is being driven through;

Figure 5 is a sectional view of the device, through the bar pusher holder upstream of the bar guide zone;

Figure 6 is a perspective view showing the device in a condition with the bar pusher moved part-way forward;

Figures 7, 8 show diagrammatically the means for opening and closing the tubular guide elements, and for locking the tubular elements closed;

Figures 9, 10 show, in cross-section and plan view, a modified embodiment of the drive and locking means for the tubular elements; and

Figures 11, 12 show, in cross-section and in plan view, a further embodiment of the drive and locking means for the tubular elements.

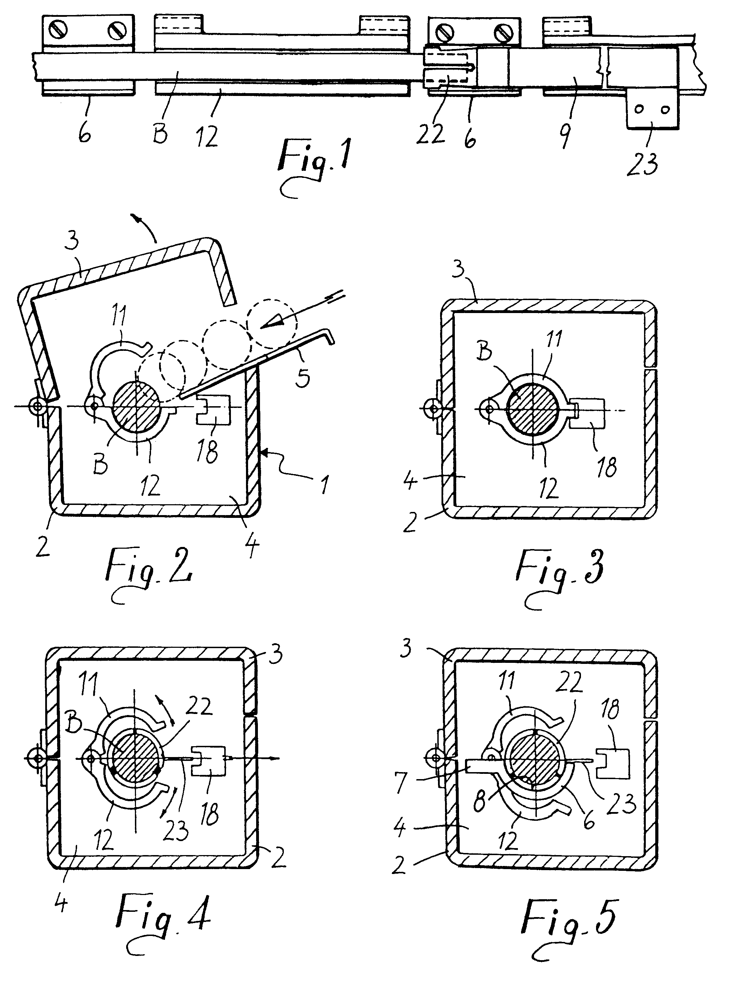

With particular reference to Figures 1, 2 and 6, a device according to the invention comprises a box-like body 1, elongated longitudinally and composed of a lower half-shell 2, mounted on a framework to one side whereof a cover 3 is hinged which defines a compartment 4 in combination with the lower half-shell 2.

The cover 3 is controlled to close and open, by means, such as for example, hydro-dynamic, mechanical or electro-mechanical means, not shown, in order to permit the introduction of bars 8 to be loaded. The bars are conveyed into the compartment 4 by an inclined surface 5 rigidly associated with the top edge of the opposite half-shell 2 to that of hinge connection to the cover 3.

In the compartment 4, there are a plurality of holders 6, aligned along an axis and spaced apart from one another.

Each holder advantageously has a rib 7 for attachment to the interior of the box-like body 1, and an upward facing semicylindrical concave side 8.

The radius of curvature of the concave side 8 coincides with that of the rod 9 whereby the individual bars 8 introduced into the magazine are pushed toward a machine, such as an automatic lathe.

Arranged between the holders 6 are tubular elements 10, each composed of a pair of semicylindrical segments 11, 12 hinged to each other along one side so that they can be set apart from each other at the opposed side confronting the incline 5.

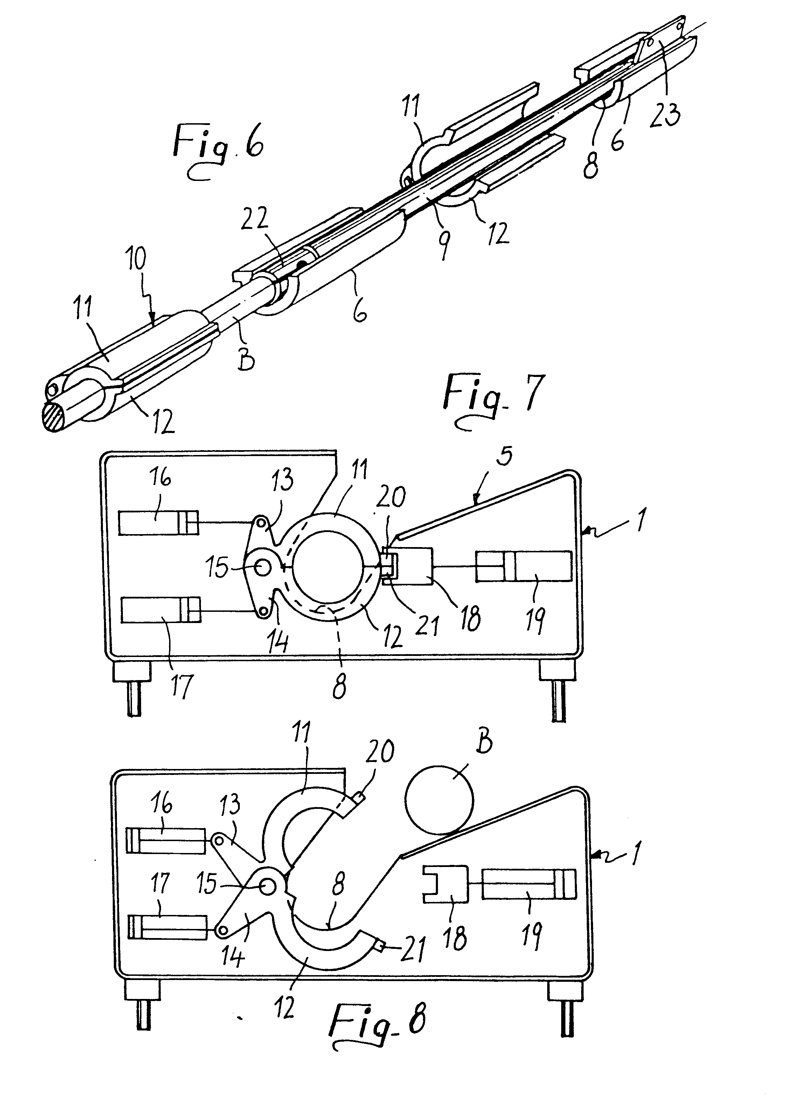

The tubular elements 10 and the holders 6 are positioned inside the box-like body so as to lay coaxial with one another. To control the tubular elements 10 to open and close, each segment 11, 12 is provided with a respective arm 13, 14 extending radially to the hinge axis which is indicated at 15 in Figure 7.

The arms 13, 14 are acted upon by two respective fluid-operated jacks 16, 17 which, when retracted, raise the upper segment 11 and lower the lower one 12, causing the tubular elements 10 to open, or, when extended, bring the segments 11, 12 back together and close the tubular elements.

With the tubular elements in the closed position , a cylindrical guide channel is defined which has the same diameter as the bars B.

To ensure the closed position of the tubular elements 10, there is provided, for each of them, a latch of sort consisting of a block 18 of forked configuration and moved back and forth perpendicularly to the respective tubular element through a fluid-operated jack 19 (Figure 7). In its forward position, the block 18 engages over projections 20, 21 of the semicylindrical segments 11,12 preventing their spreading apart.

The device's operation is illustrated in Figures 2-5.

One proceeds first of all (see Figure 2) by introducing a bar 8 into the box-like body 1. To accomplish this, the cover 3 is raised from the lower half-shell 2 to allow the bar to roll down the incline 5 onto the lower segments 12. It should be noted that at this stage only the upper segments 11 are raised, by activation of their respective jacks 16, whilst the lower ones retain their horizontal lay.

On completion of the aforesaid bar loading operations, the tubular elements 10 are closed by activating the upper jacks 16 to lower the upper segments 11 onto the lower ones, as well as the jacks 19 which lock the tubular elements 10 closed (see Figure 3).

Then, the bar begins to be machined which is fed to the machine tool by the bar pusher 9 being entrained by the entrainment member. Upon the gripper 22 approaching a tubular element 10, a special command activates the jacks 19, 16, 17 to open their respective semicylindrical segments 11, 12 enabling the gripper 22 to penetrate through them axially (see Figure 4).

The aforesaid operations are repeated sequentially until the gripper 22 has moved through all the tubular elements 10.

On completion of the bar feed, the bar pusher rod 9 returns to the original position and the lower segments 12 take again the horizontal lay of Figure 2, ready to receive another bar.

Thereafter, the operating procedure is repeated as described above.

A basic feature of this invention is that the bar B is at all times guided over its entire length. The bar guide channel defined by the segments 11, 12 can be easily adapted to the bar gage by replacing the segments 11, 12 with other having corresponding dimensions or by providing inserts inside the segments to modify their opening.

Another advantage of this invention is to be seen in the possibility of using a bar pushing rod of larger diameter than the bar, which rod does not have to be replaced on changing the bar gage. In fact, it will be sufficient in this case to replace the gripper 22 leaving its outside diameter unchanged.

A further advantage of the invention is the system for locking the guides which remain closed even when they are subjected to powerful shocks generated by the rotating bar.

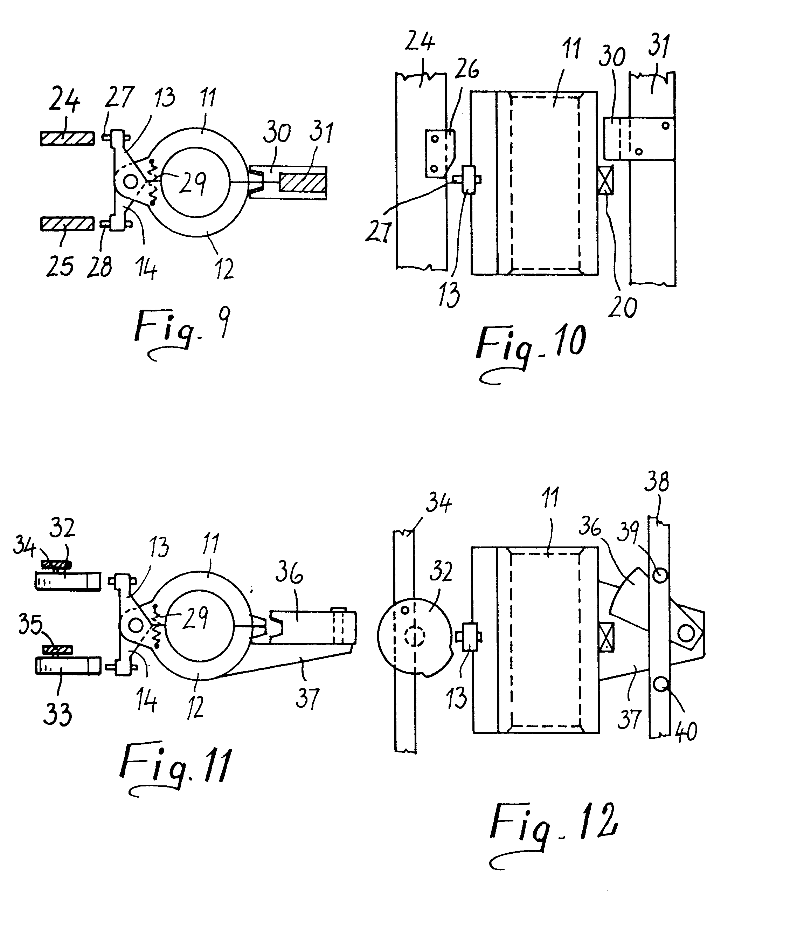

In a preferred variation of the invention, shown in Figures 9 and 10, the tubular element 10 opening is controlled through a rectilinear cam system. To this end, beside the tubular elements there are provided two superimposed rods 24, 25 driven reciprocatingly longitudinally and provided with cams 26 which act on tips 27, 28 adjustably inserted in the ends of the arms 13, 14. To close the segments 11, 12 there is provided a spring 29, whilst locking in the closed condition is accomplished by forked blocks 30 rigidly associated with a rod 31 which is driven longitudinally between a position where the blocks 30 hold back the projections 20, 21 of the segments 11, 12 and a position of disengagement where the segments can be moved apart from each other.

Lastly, Figures 11, 12 illustrate a solution, similar to the previous one, but incorporating oscillable cams instead of stationary cams and blocks. In particular, for driving the semicylindrical segments 11, 12 there are provided two cams 32, 33 expediently rotatable about a stationary vertical axis and being articulated to longitudinal drive rods 34, 35, whilst each forked block 36 is journalled to a bracket 37 protruding from the lower segment 12. Over the block 36 there extends a rod 38 which is reciprocatingly driven and has pins 39, 40 which, on the rod being driven, cause the block to oscillate between the locked and unlocked positions of the semicylindrical elements.

Of course any of the details of the device according to the invention may be replaced by technically equivalent elements.

Furthermore, any materials, dimensions and contingent shapes may be used according to contingent requirements.

CLAIMS

1. A bar guiding device for use with equipment for feeding bars to machine tools, which is characterized in that it comprises a plurality of fixed coaxial holders (6) having a semicylindrical upwardly open concave side (8) for supporting the bar pusher (9), between said holders there being interposed coaxially bar- (8) -guiding tubular elements (10) adapted to be opened along one and the same side and each including a pair of semicylindrical segments (11, 12) hinge-mounted along one side and being controlled to move toward each other and form a guide channel for a bar and to move away from each other and permit introduction of a bar and the bar pusher therethrough.

2. A device according to claim 1, characterized in that the semicylindrical segments have radial arms (13, 14) on which there act drive means (16, 17) to open and close the semicylindrical segments.

3. A device according to claim 2, characterized in that to secure the tubular elements (10) in the closed position, there is provided a latch of sort consisting of a fork-shaped block (18) and being driven between a locked position and an unlocked position of the cylindrical segments (11, 12), said latch being effective, in the locked position, to engage over projections (20, 21) presented by the semicylindrical segments.

4. A device according to claim 2, characterized in that said drive means comprise fluid-operated jacks (16, 17, 19).

5. A device according to claim 2, characterized in that said drive means comprise cams (26) rigid with parallel rods (24, 25) to the tubular elements (10) and being driven reciprocatingly.

6. A device according to claim 3, characterized in that said latch (30) is rigidly associated with a rod (31) parallel to the tubular element (10) and reciprocatingly driven.

7. A device according to claim 2, characterized in that the drive means comprise rotating cams (32, 33) articulated to parallel rods (34, 35) to the tubular elements (10) and reciprocatingly driven.

8. A device according to claim 3, characterized in that the latches (36) are journalled to respective brackets (37) rigid with the semicylindrical segments (12) of the tubular elements and driven by the reciprocating rods (38).

Fig.1

Fig.2

Fig.3

Fig.4

Fig.5

_Fig. 6_

_Fig. 7_

_Fig. 8_

0214585

Fig. 9

Fig. 10

Fig. 11

Fig. 12